# EUROPEAN PATENT SPECIFICATION

(11) **EP 1 811 307 B1**
(45) Date of publication and mention of the grant of the patent: **23.05.2018**
(21) Application number: 06250335.4
(22) Date of filing: 23.01.2006
(51) Int. Cl.: G01P 15/00, G01P 15/08, G01P 1/02

(54) **Suspension mechanism for high performance accelerometers**
Lagerungsmechanismus für Hochleistungsbeschleunigungsmesser
Mécanisme de suspension pour accéléromètres haute performance

(43) Date of publication of application: 25.07.2007
(73) Proprietor: Honeywell International Inc., Morris Plains, NJ 07950 (US)
(72) Inventor: Dwyer, Paul, Seattle, WA 98103 (US)
(74) Representative: Houghton, Mark Phillip

(56) References cited:
- US-A- 3 482 121
- US-A- 3 507 158
- US-A- 3 743 869
- US-A- 4 854 169

## Description

It is often necessary to isolate a precision transducer from external stress. Such stress may be caused by mechanical distortion of the case or other structure to which the transducer is mounted, or by differential thermal expansion or contraction between the transducer and the case. Isolation from external stress can in principle be achieved by using a compliant mounting system. However, a compliant mounting system will not in general provide precise and stable alignment of the transducer with respect to its case. For many transducers, such alignment is critical for achieving proper operation. A compliant mounting system may also result in unwanted mechanical oscillation of the transducer when the case is exposed to vibration.

One type of precision transducer that is especially susceptible to external stress is an accelerometer. This is due, in part, to the extreme level of accuracy being sought. An accelerometer is an example of an instrument that must not be allowed to change position or vibrate with respect to its case. One prior accelerometer mounting technique connects the accelerometer to the case by means of a metal ring or by means of a structural adhesive such as an epoxy resin. These prior non-compliant mounting techniques result in stress being transmitted to the accelerometer due to differential thermal expansion between the accelerometer and the mounting ring and case. These prior techniques also transmit stress to the accelerometer when the case is subjected to mechanical distortion. Distortion can be induced by mounting the case to a surrounding support, or by differential thermal expansion between the case and the support. Dimensional instabilities in epoxy joining materials can occur, especially at elevated temperatures. All such stresses may affect the output of a precision accelerometer, and may result in reduced stability. The temperature induced stresses also may lead to increased variation of accelerometer output with temperature, and may create thermally induced errors in the accelerometer output. Thus, an improved mounting system for a precision transducer would be an advance in the art that would be greatly welcomed. Other examples of prior art devices can be found disclosed in US4854169, US3482121, US3507158 and US3743869.
The present invention provides for an apparatus and a corresponding method of making an accelerometer as claimed in the accompanying claims.

Particular embodiments are described in detail below with reference to the following drawings.
FIGURE 1 is a perspective view of an accelerometer mounted in a case as formed in accordance with an embodiment of the present invention;.
FIGURE 2 is a cross sectional side view of a suspension diaphragm and a flange formed in accordance with a particular embodiment;
FIGURE 3 is a top view of the preform showing the securing channels and matching conduit channels of the suspension diaphragm; and
FIGURE 4 is a cross sectional view of the suspension device of FIGURE 1.

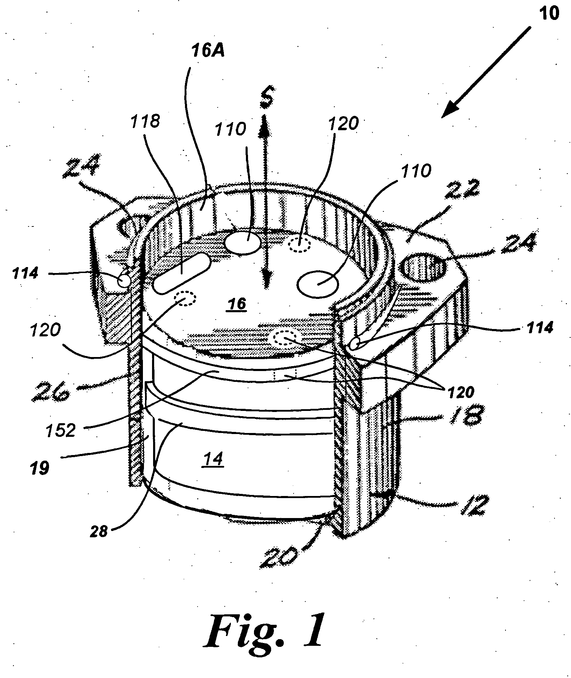

FIGURE 1 is a perspective view of an assembly 10 with a mounting system as formed in accordance with a particular embodiment. The assembly 10 includes a case or container 12 that is generally cylindrical, a transducer 14 and a suspension device or diaphragm apparatus 16. The case 12 includes a cylindrical sidewall 18, a base 20, and a flange 22. The flange 22 includes mounting holes 24 that are used to mount the case 12 to a supporting structure (not shown). In one embodiment, the case 12 is made from 304 stainless steel. The flange 22 may be welded to the sidewall 18 via a weld joint 114.

The suspension device 16 may be made from 304 stainless steel or substantially similar materials and is generally circular. The suspension device 16 is received at an open end of the cylindrical sidewall 18. The suspension device 16 has one or more first conduit channels 110 and one or more second conduit channels 118. The conduit channels 110 and 118 may have various shapes, such as circular, oblong, square, triangular or cigar-shape. The shapes of the conduit channels 110 and 118 vary to accommodate different wiring requirements or harnesses. The number of conduit channels is not limited to three, but may vary according to the wiring requirements of the transducer 14, such as an accelerometer. The location or distribution of the conduit channels 110, 118 may vary to accommodate the wiring requirements of the transducer 14.

Beneath the suspension device 16 is a compliant preform 152 that is generally circular. The compliant preform has conduit channels that match the suspension device 16 conduit channels 110 and 118.

Distributed in a planar configuration is a plurality of securing channels 120 shown at dashed ovals on the surface of the suspension device 16, and one is presented in cross section of the preform 152. The securing channels 120 originate within the compliant preform 152 and contact the lower surface of the suspension device 16. As shown in FIGURE 1, three securing channels 120 are more or less distributed in a triangular pattern. The shapes of the securing channels 120 may have various shapes, including circular, oblong, square, triangular, or cigar-shaped. Other configurations, such as linear, are possible depending on the number and positional arrangement of the securing channels 120. The securing channels 120 may receive rivets, staples, or fluid-like adhesives, including epoxy-based adhesives.

The transducer 14 has a generally cylindrical shape and includes a bellyband 28. The transducer 14 is an accelerometer that is adapted to respond to accelerations along an axial disposed sensitive axis S by producing an electrical signal that indicates the direction and magnitude of such acceleration. The transducer 14 is suspended or held by the suspension device 16. As described below, the suspension device 16 provides precise and stable alignment of the transducer 14, such that the transducer is not free to undergo translational or rotational movement with respect to the case 12. Furthermore, the suspension device 16 restrains or isolates the transducer 14 from making contact with the side wall 18 and the base 20 of the case 12 by interposing a gap 19 between the transducer's perimeter and the internal walls of the case 12. The gap 19 and the suspension device 16 serve to isolate the transducer 14 from stresses that would otherwise result from distortion of the case 12 whenever the case 12 is not mounted on a flat surface or is exposed to deferential thermal expansion forces or temperatures. The gap 19 is filled with an inert gas.

The suspension device 16 includes an annular hybrid support 16A. The hybrid support 16A is welded to the flange joint 22 via a weld joint 114. The annular hybrid support 16A is disposed along the periphery of the suspension device 16 and serves to enhance or buttress the structural firmness of the suspension device 16.

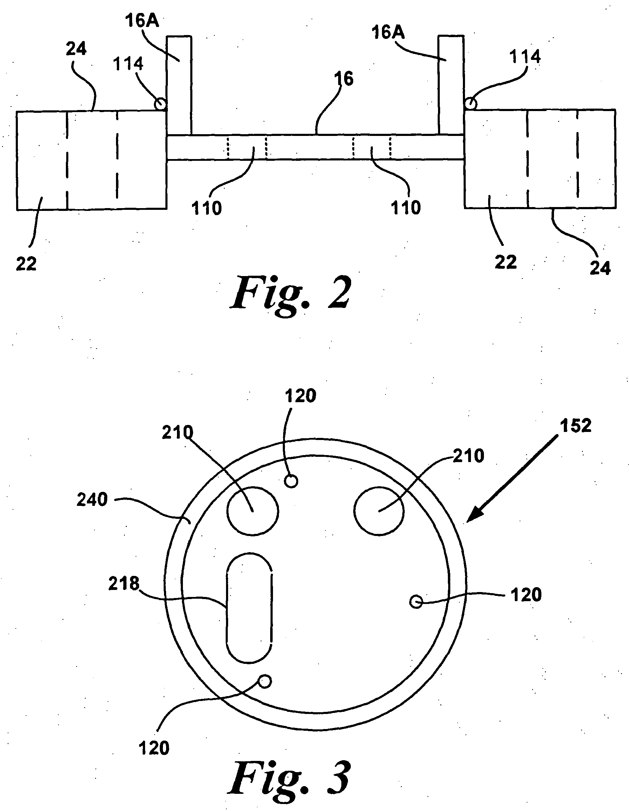

FIGURE 2 is a cross sectional side view of the suspension device 16, the hybrid support 16A, and the flange 22. The channels 110 convey electrical wires or leads to and from the accelerometer 14. The cross sectional view further illustrates the peripheral position of the annular hybrid support 16A in relation to the suspension 16. The suspension device 16 and the hybrid support 16A reside within the opening of the flange 22. The hybrid support 16A affixed to the suspension 16 by adhesives or fused by welding. The hybrid support 16A is welded to the flange 22 via the weld joint 114. The weld joint 114 may have a bead formation acquired from welding the flange 22 to the hybrid support 16A. Alternatively, the flange 22 and the hybrid support 16A may be attached by a brazing process.

FIGURE 3 is a top view of the preform 152. The preform 152 is generally circular and has conduit channels that generally match the number, shape, and location of the conduit channels 110, 118 of the suspension device 16. The preform 152 has one or more first conduit channels 210 and one or more second conduit channels 218. The conduit channels 210 and 218 may have various shapes, such as circular, oblong, square, triangular or cigar-shape. The shapes of the conduit channels 210 and 218 vary to accommodate different wiring requirements or harnesses. The number of conduit channels is not limited to three, but may vary according to the wiring requirements of the transducer 14, in both number and location. Interspersed with the conduit channels 210, 218 are the securing channels 120. The securing channels 120 are generally circularly shaped, but may vary in shape, number, location, and distribution. Along the periphery of the preform 152 is a reinforcing ring 240.

. The preform 152 is a compliant, fiberglass-based low-stress epoxy adhesive film that is electrically insulating, substantially similar to Ablefilm 561® obtained from Ablestik, Inc., 20021 Susana Road, Rancho Donmingues, CA. Other adhesive films substantially similar to Ablefilm 561® may be used provided the films are formulated to be electrically non-conductive. The reinforcing ring 240 is generally made of 304 stainless steel.

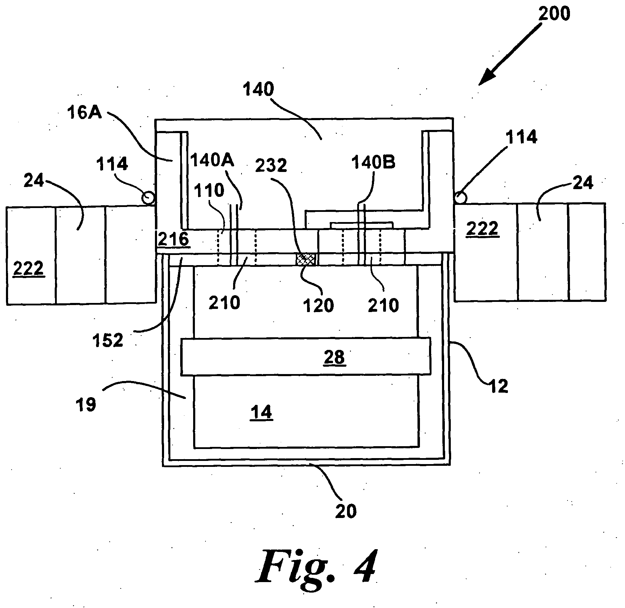

FIGURE 4 is a cross sectional view of an assembly 200 formed in accordance with an alternate embodiment of the suspension device 16 holding the transducer 14 and fitted into the container 12. The alternate embodiment is a suspension device 216 that is monolithic with the annular hybrid support 16A. The suspension device 216 is press fitted between a flange 222 and is affixed to the preform 152 that lies beneath the suspension device 216. The preform 152 straddles across the opening of the container 12.

In cross section the second conduit channels 210 of the preform 152 are shown with conduits 140A and 140B routed through the channels 210. The conduits 140A and 140B similarly route through the channels 110 of the suspension 216. An epoxy plug 232 depicted in cross hatch is shown occupying one of the securing channels 120. The epoxy plug 232 contacts the side walls of the channels 120 and at least a portion of the surface of the suspension device 216. The adhesive plugs 232 occupying the securing channels 120 secure the suspension device 216 with the preform 152 to more firmly hold the transducer 14.

When more than one adhesive channel 120 is filled with a cured epoxy resin, a more rigid and integral bond between the suspension device 216 and the preform 152 is established. Preferred embodiments utilize epoxy resins having comparable coefficients of thermal expansion as the materials made from the preform 152 and the suspension diaphragm 16.

An electronics box 140 is located above the suspension device 216 where conduits 140A and 140B are conveyed from the electronics box 140, through the conduit channels 220 and 228, to the transducer 14. The space 19 is shown separating the transducer 14 from the internal surfaces of the container 12.

Several modifications and variations of the present embodiments are possible in light of the above teachings. For example, other compositions of the compliant preform may be used, that is a heat conductor but electrically non-conductive. Ablefilm 561K® obtained from Ablestik, Inc. Ablefilm 561K® is a fiberglass low-stress epoxy adhesive film formulated to be both a heat conductor and an electrical insulator. Another example is that the securing channels 120 may be linearly configured within the compliant preform 152.

Accordingly, the scope of the invention is not limited by the disclosure of the preferred embodiment. Instead, the invention should be determined entirely by reference to the claims that follow.

## Claims

1. An accelerometer (200) comprising:
a container (12) having an opening;
a flange (22) configured to be welded to a sidewall of the container (12); a transducer (14); **characterized by**: a suspension assembly having a diaphragm (16, 216) and an annular support (16A) disposed along the periphery of the opening, wherein the annular support (16A) is affixed to, or monolithic with, the diaphragm (16, 216); a compliant preform (152) affixed between the diaphragm (16,216) and the transducer (14), wherein the compliant preform (152) includes securing channels (120) and a first plurality of holes (210), wherein the diaphragm (16,216) includes a second plurality of holes (110), configured such that the second plurality of holes (110) aligns with the first plurality of holes (210), and wherein the diaphragm (16,216) is secured to the compliant preform (152) via the securing channels (120); and
one or more conduits (140A,140B), wherein each conduit of the one or more conduits (140A,140B) is coupled to the transducer (14) through a hole of the first plurality of holes (210) and a hole of the second plurality of holes (110), wherein the annular support (16A) is affixed to the flange and the diaphragm (16,216) straddles across the opening and is configured to hold the transducer (14) at a space (19) from the interior surfaces of the container (12), the space (19) being filled with an inert gas.

2. The accelerometer (200) of Claim 1 wherein the securing channels (120) are arranged in a planar configuration.

3. A method of making an accelerometer comprising:
preparing a container (12) with an opening; preparing a flange (22) and welding it to a sidewall of the container (12); disposing a transducer (14) within the container interior beneath the opening, the transducer having a mounting section; **characterized by**: engaging a compliant preform (152) having securing channels (120) and a first plurality of holes (210) with the opening of the container and the mounting section;
engaging a suspension assembly having a diaphragm (16,216) and an annular support (16A) with the compliant preform, and having a second plurality of holes (110), such that the second plurality of holes (110) aligns with the first plurality of holes (210); securing the diaphragm (16,216) to the compliant preform (152) via the securing channels (120); straddling the suspension assembly across the opening;
securing the transducer (14) to the straddled suspension assembly; routing conduits (140A,140B) to the transducer (14) through the aligned first (210) and second (110) hole plurality;
coupling the conduits (140A,140B) to the transducer (14); and
securing the straddled suspension assembly by affixing the annular support (16A) to the flange (22), wherein the transducer (14) is held within the container (12) by the diaphragm (16,216) and is surrounded by a space (19) interposed between the transducer and the interior surfaces of the container, the method further comprising filling the space (19) with an inert gas.

4. The method of Claim 3, wherein the diaphragm (16,216) is affixed to the compliant preform (152) by applying adhesive to the securing channels (120) disposed within the compliant preform (152).

## Patentansprüche

1. Beschleunigungsmesser (200), umfassend:
einen Behälter (12) mit einer Öffnung;
einen Flansch (22), der dafür ausgelegt ist, an eine Seitenwand des Behälters (12) geschweißt zu werden;
einen Messwandler (14);
**gekennzeichnet durch**: eine Lagerungsbaugruppe, die eine Membran (16, 216) und eine ringförmige Stützwand (16A), die entlang dem Umfang der Öffnung angeordnet ist, aufweist, wobei die ringförmige Stützwand (16A) an der Membran (16, 216) befestigt oder monolithisch mit dieser ausgebildet ist;
ein kompatibles Formteil (152), das zwischen der Membran (16,216) und dem Messwandler (14) befestigt ist, wobei das kompatible Formteil (152) Befestigungskanäle (120) und eine erste Mehrzahl von Öffnungen (210) aufweist, wobei die Membran (16,216) eine zweite Mehrzahl von Öffnungen (110) aufweist, die derart angeordnet sind, dass die zweite Mehrzahl von Öffnungen (110) mit der ersten Mehrzahl von Öffnungen (210) gefluchtet ist, und wobei die Membran (16,216) am kompatiblen Formteil (152) mittels der Befestigungskanäle (120) befestigt ist;
und
eine oder mehrere Leitungen (140A,140B), wobei jede der ein oder mehreren Leitungen (140A,140B) mit dem Messwandler (14) durch eine Öffnung der ersten Mehrzahl von Öffnungen (210) und eine Öffnung der zweiten Mehrzahl von Öffnungen (110) verbunden ist,
wobei die ringförmige Stützwand (16A) am Flansch befestigt ist und die Membran (16,216) die Öffnung überspannt und dafür ausgelegt ist, den Messwandler (14) mit einem Freiraum (19) von den Innenflächen des Behälters (12) fernzuhalten, wobei der Freiraum (19) mit einem Inertgas gefüllt ist.

2. Beschleunigungsmesser (200) nach Anspruch 1, wobei die Befestigungskanäle (120) in einer planaren Ausgestaltung angeordnet sind.

3. Verfahren zur Herstellung eines Beschleunigungsmessers, umfassend:
Vorbereiten eines Behälters (12) mit einer Öffnung;
Vorbereiten eines Flanschs (22) und Schweißen des Flanschs an eine Seitenwand des Behälters (12);
Anordnen eines Messwandlers (14) im Behälterinnern unterhalb der Öffnung, wobei der Messwandler einen Montageabschnitt aufweist;
**gekennzeichnet durch**: Ineingriffbringen eines kompatiblen Formteils (152), das Befestigungskanäle (120) und eine ersten Mehrzahl von Öffnungen (210) aufweist, mit der Öffnung des Behälters und dem Montageabschnitt;
Ineingriffbringen einer Lagerungsbaugruppe, die eine Membran (16,216) und eine ringförmige Stützwand (16A) aufweist, mit dem kompatiblen Formteil, und eine zweite Mehrzahl von Öffnungen (110) derart aufweisend, dass die zweite Mehrzahl von Öffnungen (110) mit der ersten Mehrzahl von Öffnungen (210) gefluchtet ist;
Befestigen der Membran (16,216) am kompatiblen Formteil (152) über die Befestigungskanäle (120);
Ausspannen der Lagerungsbaugruppe über der Öffnung;
Befestigen des Messwandlers (14) an der ausgespannten Lagerungsbaugruppe;
Verlegen von Leitungen (140A,140B) zum Messwandler (14) durch die gefluchtete erste (210) und zweite (110) Mehrzahl von Öffnungen;
Verbinden der Leitungen (140A,140B) mit dem Messwandler (14); und
Befestigen der ausgespannten Lagerungsbaugruppe durch Befestigen der ringförmigen Stützwand (16A) am Flansch (22),
wobei der Messwandler (14) im Behälter (12) durch die Membran (16,216) gehalten wird und von einem Freiraum (19) umgeben ist, der zwischen dem Messwandler und den Innenflächen des Behälters angeordnet ist, wobei das Verfahren ferner das Ausfüllen des Freiraums (19) mit einem Inertgas umfasst.

4. Verfahren nach Anspruch 3, wobei die Membran (16,216) am kompatiblen Formteil (152) befestigt wird, indem ein Klebstoff auf die Befestigungskanäle (120), die im kompatiblen Formteil (152) angeordnet sind, aufgebracht wird.

## Revendications

1. Accéléromètre (200) comprenant :
un contenant (12) ayant une ouverture ;
une bride (22) configurée de façon à être soudée à une paroi latérale du contenant (12) ;
un transducteur (14) ;
**caractérisé par** :
un ensemble de suspension ayant une membrane (16, 216) et un support annulaire (16A) disposé le long du pourtour de l'ouverture, ce support annulaire (16A) étant fixé à, ou monolithique avec, la membrane (16, 216) ;
une préforme souple (152) fixée entre la membrane (16, 216) et le transducteur (14), cette préforme souple (152) comprenant des canaux de fixation (120) et une pluralité de trous (210), la membrane (16, 216) comportant une deuxième pluralité de trous (110), configurée de manière à ce que cette deuxième pluralité de trous (110) s'aligne avec la première pluralité de trous (210), et la membrane (16, 216) étant fixée à la préforme souple (152) au moyen des canaux de fixation (120) ; et
un ou plusieurs conduits (140A, 140B), chaque conduit parmi le ou les conduits (140A, 140B) étant assemblé au transducteur (14) au moyen d'un trou de la première pluralité de trous (210) et d'un trou de la deuxième pluralité de trous (110),
le support annulaire (16A) étant fixé à la bride et la membrane (16, 216) étant à cheval en travers de l'ouverture et étant configurée de façon à maintenir le transducteur (14) à un espace (19) des surfaces intérieures du contenant (12), cet espace (19) étant rempli d'un gaz inerte.

2. Accéléromètre (200) selon la revendication 1, dans lequel les canaux de fixation (120) sont disposés dans une configuration plane.

3. Procédé de fabrication d'un accéléromètre comprenant :
la préparation d'un contenant (12) avec une ouverture ;
la préparation d'une bride (22) et son soudage à une paroi latérale du contenant (12) ;
la disposition d'un transducteur (14) au sein de l'intérieur du contenant en dessous de l'ouverture, ce transducteur ayant une section de montage ;
**caractérisé par** :
l'engagement d'une préforme souple (152) ayant des canaux de fixation (120) et une première pluralité de trous (210) avec l'ouverture du contenant et la section de montage ;
l'engagement d'un ensemble de suspension ayant une membrane (16, 216) et un support annulaire (16A) avec la préforme souple, et ayant une deuxième pluralité de trous (110), de manière à ce que cette deuxième pluralité de trous (110) s'aligne avec la première pluralité de trous (210) ;
la fixation de cette membrane (16, 216) à la préforme souple au moyen des canaux de fixation (120) ;
le montage à cheval de l'ensemble de suspension en travers de l'ouverture ;
la fixation du transducteur (14) à l'ensemble de suspension à cheval ;
l'acheminement des conduits (140A, 140B) jusqu'au transducteur (14) à travers la première (210) et la deuxième (110) pluralité de trous ;
l'assemblage des conduits (140A, 140B) au transducteur (14) ; et
la fixation de l'ensemble de suspension à cheval en fixant le support annulaire (16A) à la bride (22),
le transducteur (14) étant maintenu à l'intérieur du contenant (12) par la membrane (16, 216) et étant entouré par un espace (19) interposé entre le transducteur et les surfaces intérieures du contenant, ce procédé comprenant en outre le remplissage de cet espace (19) avec un gaz inerte.

4. Procédé selon la revendication 3, dans lequel la membrane (16, 216) est fixée à la préforme souple (152) en appliquant de la colle sur les canaux de fixation (120) disposés à l'intérieur de la préforme souple (152) .
